# EUROPEAN PATENT SPECIFICATION

(11) **EP 1 811 318 B1**
(45) Date of publication and mention of the grant of the patent: **12.01.2011**
(21) Application number: 04799669.9
(22) Date of filing: 12.11.2004
(51) Int. Cl.: G02B 1/10, G02B 5/08, G02F 1/15

(54) **ANTI-FOG DEVICE AND OUTSIDE MIRROR**
ANTI-NEBEL-EINRICHTUNG UND AUSSENSPIEGEL
DISPOSITIF ANTIBUÉE ET MIROIR EXTERNE

(43) Date of publication of application: 25.07.2007
(73) Proprietor: Murakami Corporation, Shizuoka-shi, Shizuoka, 422-8569 (JP)
(72) Inventor: KIKUCHI, Hideyuki, MURAKAMI CORPORATION, Fujieda-shi, Shizuoka 4260053 (JP); KOBAYASHI, Masaki, MURAKAMI CORPORATION, Fujieda-shi, Shizuoka 4260053 (JP)
(74) Representative: von Kreisler Selting Werner
(86) International application number: PCT/JP2004/016882
(87) International publication number: WO 2006/051604

(56) References cited:
- WO-A1-80/02678
- WO-A1-03/012540
- FR-A1- 2 841 894
- JP-A- 10 036 144
- JP-A- 11 255 515
- JP-A- 2004 001 400
- US-A1- 2001 021 066
- US-A1- 2001 040 733
- US-A1- 2004 032 655

## Description

### TECHNICAL FIELD

The present invention relates to an antifogging element and an outer mirror. More particularly the present invention relates to an antifogging element that utilizes a photocatalytic reaction.

### BACKGROUND ART

Antifogging elements that utilize photocatalytic reactions are known (refer, for example, to Patent Reference 1). In order to prevent an overly large reduction in the mirror's reflectance in the case of mirrors that employ an antifogging element, a structure is known in which a reflectance modulating layer is disposed between the reflective metal film and the photocatalyst layer (refer, for example, to Patent Reference 2). A structure in which a transparent metal film is disposed on the substrate surface is known for the purpose of improving photocatalysis (refer, for example, to Patent Reference 3).
Patent Reference 1: Japanese Patent Application Laid-open No. H10-36144
Patent Reference 2: Japanese Patent Application Laid-open No. 2001-141916
Patent Reference 3: Japanese Patent Application Laid-open No. 2001-322202 A further prior art used for the two part delimitation of claim1 is US 2001/0021066 A1.

### DISCLOSURE OF THE INVENTION

### PROBLEM TO BE SOLVED BY THE INVENTION

There have been instances in which a colorizing effect attributable to the thickness of the laminated films has been produced in antifogging elements. To counter this, the method disclosed in Patent Reference 3 brings about a reduction in the light interference effects through the formation of a thin hydrophilic functional layer containing a photocatalytic substance.

However, antifogging elements are used in a variety of environments, and in some instances the preferred structure will also differ in correspondence to the environment. As a consequence, the development is desired of antifogging element structures that are better adapted in accordance with the use environment.

An object of the present invention, therefore, is to provide an antifogging element and an outer mirror that can solve the problem identified above.

### MEANS FOR SOLVING THE PROBLEM

In order to solve the problem identified above, a first mode of the present invention is an antifogging element that utilizes a photocatalytic reaction and that is provided with a transparent substrate, a transparent layer that is formed as a film on the transparent substrate and that has a refractive index larger than that of the transparent substrate, a photocatalytic substance layer that is formed as a film on the transparent layer by stacking TiO₂ thereon and that has a refractive index larger than that of the transparent layer, and a hydrophilic layer that is formed of a hydrophilic material, on the photocatalytic substance layer, wherein the transparent layer has indium oxide as the main component and contains at least 40% tin oxide in the atomic composition ratio. This enables the introduction of an antifogging element that is resistant to acid and that has a neutral color tone with little reflective color.

The antifogging element may additionally be provided with a reflective film, that is formed on the reverse surface of the transparent substrate from the surface on which the transparent layer is formed and that reflects incident light that has traversed the hydrophilic layer, photocatalytic substance layer, transparent layer, and transparent substrate. This enables the antifogging element to be structured as an antifogging mirror.

An electrochromic layer may also be provided facing the transparent layer with the transparent substrate interposed therebetween. This makes it possible to provide an antifogging antiglare element that has a high resistance to the environment and that does not impair the native color tone of the EC element.

A second mode of the present invention is an automotive outer mirror that is provided with the antifogging element according to the first mode of the present invention. This makes it possible to obtain the same effects as the first mode.

### BEST MODE FOR CARRYING OUT THE INVENTION

Embodiments according to the present invention are described hereinbelow with reference to the drawings.

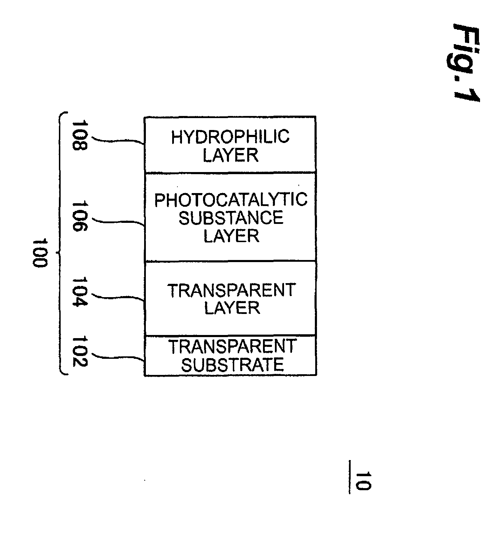

Figure 1 shows an example of the structure of an antifogging element 10 according to a first embodiment of the present invention. In this example, the antifogging element 10 comprises a light transmission member 100. The light transmission member 100 has a transparent substrate 102, a transparent layer 104, a photocatalytic substance layer 106, and a hydrophilic layer 108.

The transparent substrate 102 is a substrate formed of a transparent material, for example, glass or acrylic. The transparent substrate 102 is preferably colorless and transparent. The transparent layer 104 is a transparent layer that has a refractive index larger than the refractive index of the transparent substrate 102, and is formed on the transparent substrate 102 as a film of an indium oxide and tin oxide mixture. This indium oxide and tin oxide mixture may be, for example, indium tin oxide (ITO). The photocatalytic substance layer 106 is a layer formed as a film on the transparent layer 104 by stacking TiO₂ thereon, and has a refractive index larger than the refractive index of the transparent layer 104.

The hydrophilic layer 108 is a layer formed of a hydrophilic material, for example, a porous inorganic oxide film, on the photocatalytic substance layer 106. In the example under consideration, the hydrophilic layer 108 is formed of silicon oxide (SiO₂). Silicon oxide is an example of the hydrophilic material. In another example, the hydrophilic layer 108 may be formed of the same material as the photocatalytic substance layer 106. For example, the hydrophilic layer 108 may be formed by a porosification treatment of the surface of the photocatalytic substance layer 106.

The function of each layer is described in greater detail in the following. The hydrophilic layer 108 prevents the light transmissive member 100 from fogging up by causing water droplets adhering on the surface of the light transmissive member 100, for example, to spread into a thin film. The antifogging element 10 is thereby able to manifest an antifogging behavior. The hydrophilic layer 108 has a thickness, for example, of 5 to 100 nm.

Utilizing the commonly known TiO₂-based photocatalytic reactions, the photocatalytic substance layer 106 degrades and eliminates organic material adhering on the surface of the hydrophilic layer 108. As a consequence of this, the photocatalytic substance layer 106 keeps the hydrophilic layer 108 clean using light incident from the outside. This results in the antifogging element 10 in accordance with the example under consideration being able to maintain its antifogging behavior long term. The photocatalytic substance layer 106 has a thickness, for example, of 40 to 400 nm.

The transparent layer 104 is formed between the photocatalytic substance layer 106 and the transparent substrate 102 and is formed of a material that has a refractive index larger than that of the transparent substrate 102 and smaller than that of the photocatalytic substance layer 106. As a consequence of this, the transparent layer 104 reduces the reflectance of the photocatalytic substance layer 106. This reflectance is, for example, the surface reflectance for the photocatalytic substance layer 106 at the interface on the side of the transparent substrate 102.

The reduction in the reflectance of the photocatalytic substance layer 106 using the transparent layer 104 in accordance with this example makes it possible to reduce the reflective color (interference color) at the photocatalytic substance layer 106. As a consequence of this, an antifogging element 10 can be provided whose color tone is not biased to a particular color and that has a neutral color tone.

The transparent layer 104 preferably has a thickness sufficient to prevent reflective color from the photocatalytic substance layer 106. The thickness of the transparent layer 104 is, for example, 10 to 120 nm, preferably 30 to 100 nm, and more preferably 50 to 80 nm.

By utilizing the electroconductivity exhibited by the transparent layer 104 comprising an indium oxide and tin oxide mixture, in another example the transparent layer 104 may also be used as a heater in order to heat the hydrophilic layer 108. In this case also, the transparent layer 104 preferably has a thickness sufficient to prevent reflective color from the photocatalytic substance layer 106, unlike the case in which this layer is used simply as a heater.

In yet another example, a prescribed voltage may be applied to the transparent layer 104. The voltage applied to the transparent layer 104 may be a voltage with reference to, for example, the hydrophilic layer 108 or the back side of the transparent substrate 102. The transparent layer 104 may receive a positive voltage. In this case also, the transparent layer 104 preferably has a thickness sufficient to prevent reflective color from the photocatalytic substance layer 106.

**[Table]**

| atomic composition ratio (at ratio) | | acid resistance of the transparent layer 104 (ITO film) | acid resistance after a hydrophilic coating | resistance of the transparent layer 104 (Ω/square) |
|---|---|---|---|---|
| In | Sn | | | |
| 67.1 | 32.9 | delamination occurs (NG) | delamination occurs (NG) | 45 |
| 63.7 | 36.3 | delamination occurs (NG) | delamination occurs (NG) | 58 |
| 60.2 | 39.8 | no delamination | no delamination | 112 |
| 53.5 | 46.5 | no delamination | no delamination | 210 |
| 37.3 | 62.7 | no delamination | no delamination | 474 |
| 0 | 100 | no delamination | no delamination | 4110 |

The relationship between the composition of the transparent layer 104 and acid resistance is shown in Table 1. In the case of the acid resistance after a hydrophilic coating in Table 1, this is the result of acid resistance testing on a sample obtained by the formation on the transparent layer 104 of a 200 nm film of TiO₂ as the photocatalytic substance layer 106 and a 20 nm film of SiO₂ as the hydrophilic layer 108. The resistance of the transparent layer 104 refers to the resistance of the ITO film at the different composition ratios.

The antifogging element 10 can be used, for example, in products that are used outside, such as automotive outer mirrors and filters for surveillance cameras. In such cases, it is desirable that the colorizing activity for such an antifogging element 10 be reduced by means of a structure that is better adapted to the outside.

In the case of the outside ambient, pollutant gases such as sulfur dioxide and nitrogen oxide are released into the atmosphere during the combustion of oil or coal, for example, by automobiles or at plants, factories, or power plants, or by the boilers of buildings. These are converted into sulfuric acid and nitric acid in the atmosphere and form acid rain (pH no more than 5.6), which falls back to earth. For example, according to the summary of the 1996 Environmental White Paper from the Environment Agency (Printing Office of the Ministry of Finance), this pH has reached about 4.4 to 5.5 in Japan in recent years. In addition, the pH has even become 4 and below in some locations according to the Monitoring Report of June, 1998 from the Japan Acid Rain Monitoring Network.

As a consequence, in some instances it will be desirable for the antifogging element 10 to have a good acid resistance. Moreover, in this case, for example, the transparent layer 104, which is the intermediate layer between the transparent substrate 102 and the photocatalytic substance layer 106, in addition to suppressing reflective color and surface reflectance at the photocatalytic substance layer 106, will also be required to have a good acid resistance.

In order to determine the acid resistance of the transparent layer 104, 0.2 cc aqueous 1 N-H₂SO₄ solution (pH = 1) was dripped onto transparent layers 104 (thickness = 70 nm) with different atomic composition ratios, followed by holding for 24 hours in a 23°C ambient having a humidity of 50%. The presence of fatal property defects, such as film delamination, was determined after the holding period. While film delamination occurred at an In : Sn atomic composition ratio of 63.7: 36.3 (Sn proportion = 36.3%), delamination was absent at an Sn proportion of 39.8%, and it was confirmed that problems with fatal property defects such as film delamination were not produced when the Sn proportion was 40% or more. It was thus determined that the Sn proportion in the transparent layer 104 is preferably at least about 40%. It can be difficult to obtain a good acid resistance for the transparent layer 104 when the Sn proportion is less than 40%.

The atomic composition ratio between In and Sn cited here in the example under consideration is the ratio between the number of In atoms and the number of Sn atoms in the transparent layer 104. The atomic composition ratio was determined with a Model 1800S X-ray photoelectron spectrochemical analyzer from ULVAC-PHI, Inc. This atomic composition ratio is equal to the ratio between the number of In atoms present in the indium oxide in the transparent layer 104 and the number of Sn atoms present in the tin oxide in the transparent layer 104. As a consequence, the atomic composition ratio of the Sn oxide in the transparent layer 104 is equal to the Sn proportion in the transparent layer 104. The Sn proportion is the percentage of the number of Sn atoms with respect to the sum of the number of In atoms and the number of Sn atoms in the transparent layer 104.

When the atomic composition ratio of the tin oxide in the transparent layer 104 becomes excessively high, the resistance rises and a relatively high voltage must be applied when this layer is used as a heating film; light scattering phenomena increase due to the relationship with the TiO₂ film formed on the transparent layer 104; and the TiO₂ film may convert to rutile crystals and the photocatalytic functionality may also be reduced. As a consequence, the transparent layer 104 preferably contains tin oxide in a proportion of less than 60% in the atomic composition ratio.

The transparent layer 104 in the antifogging element 10 described with reference to Figure 1 in the example under consideration contains at least 40% tin oxide in the atomic composition ratio. This enables the acid resistance of the transparent layer 104 to be improved while maintaining satisfactory processing characteristics for the transparent layer 104. As a consequence, the example under consideration can provide an antifogging element 10 that is stable even to the effects of today's acid rain and thus that has an improved environmental resistance. This also makes it possible to provide an antifogging element that is durable to acid and that has a neutral color tone with little reflective color. The transparent layer 104 may contain, for example, from 40 to 60% tin oxide in the atomic composition ratio.

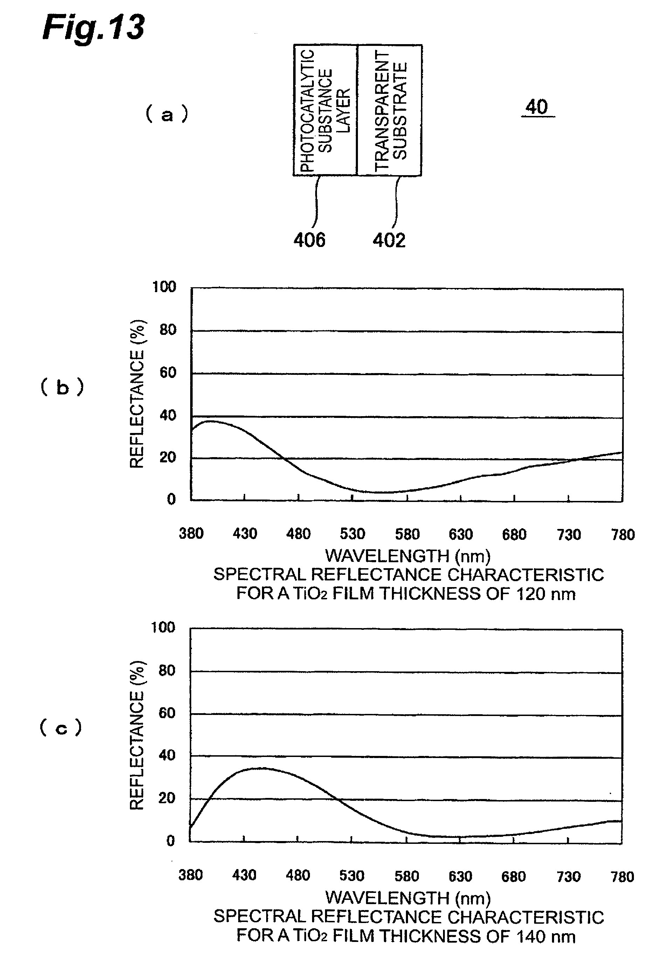

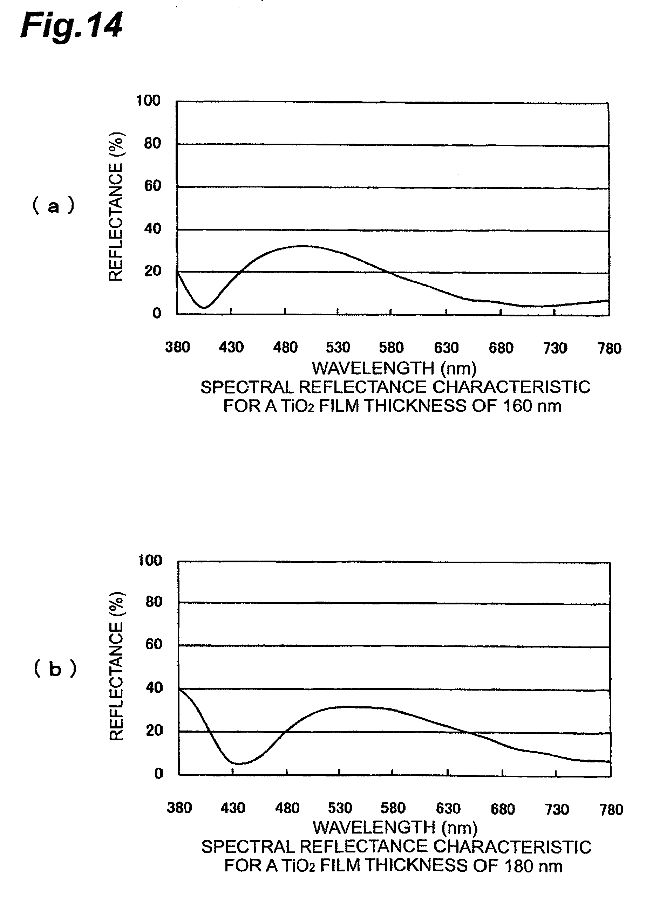

An element 40 that is a comparative example with reference to the antifogging element 10 is shown in Figure 13, while the spectral characteristics of this element 40 are shown in Figure 14. The structure of the element 40 is shown in (a) of Figure 13. The element 40 comprises a transparent substrate 402 and a photocatalytic substance layer 406. The transparent substrate 402 is a substrate that is the same as or similar to the transparent substrate 102 described with reference to Figure 1. The photocatalytic substance layer 406 is a layer that is the same as or similar to the photocatalytic substance layer 106 described with reference to Figure 1, with the exception that the former is formed directly on the transparent substrate 402. The element 40 may additionally be provided with a layer that is the same as or similar to the hydrophilic layer 108 described with reference to Figure 1, wherein in this case such a layer would be provided on the photocatalytic substance layer 406.

Here, when a photocatalytic substance layer 406 (TiO₂) is formed on the transparent substrate 402 (for example, a glass substrate) as in the element 40, different reflectance characteristics are exhibited as a function of the thickness of the photocatalytic substance layer 406 and different reflective colors can be produced.

The spectral reflectance characteristics of the element 40 are shown in (b) and (c) of Figure 13 and (a) and (b) of Figure 14 for photocatalytic substance layer 406 (TiO₂) thicknesses of 120 nm, 140 nm, 160 nm, and 180 nm. In correspondence to the thickness of the photocatalytic substance layer 106, a purple-tinted color tone is produced in (b) of Figure 13; a blue-tinted color tone is produced in (c) of Figure 13; a green-tinted color tone is produced in (a) of Figure 14; and a yellow-tinted color tone is produced in (b) of Figure 14. This comparative example demonstrates that reflective color tied to the TiO₂ film thickness is produced by reflection at the interface between the photocatalytic substance layer 406 and the transparent substrate 402.

The spectral characteristics of the transparent layer 104 present in the antifogging element 10 shown in Figure 1 in relation to the first embodiment of the present invention are given in Figures 2, 3, and 4. The transmittance and reflectance are shown as a function of wavelength in from (a) of Figure 2 to (b) of Figure 4 for the transparent layers 104 with the individual compositions shown in Table 1. The thickness of the ITO film in these transparent layers 104 is 70 nm.

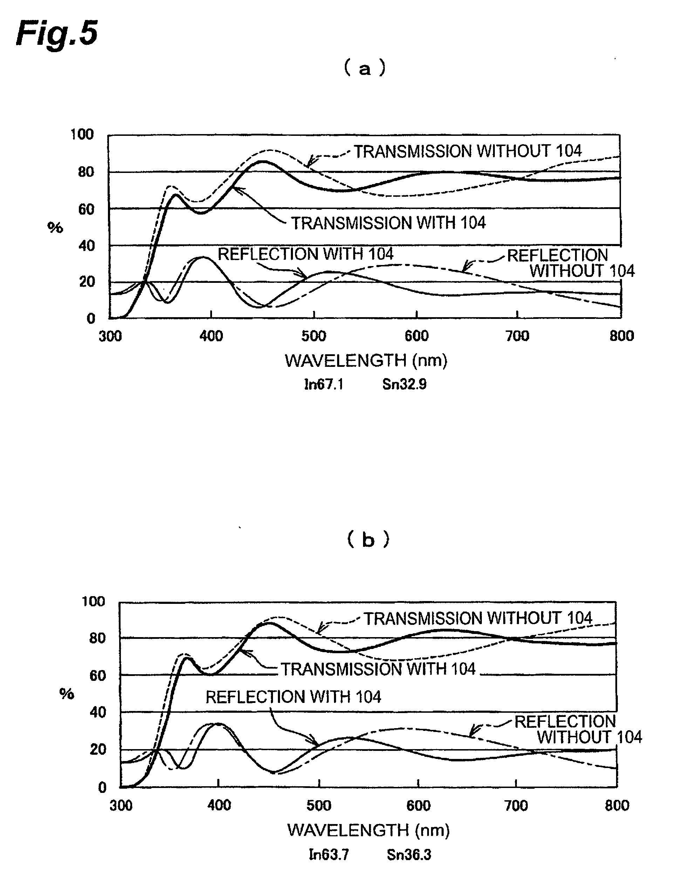

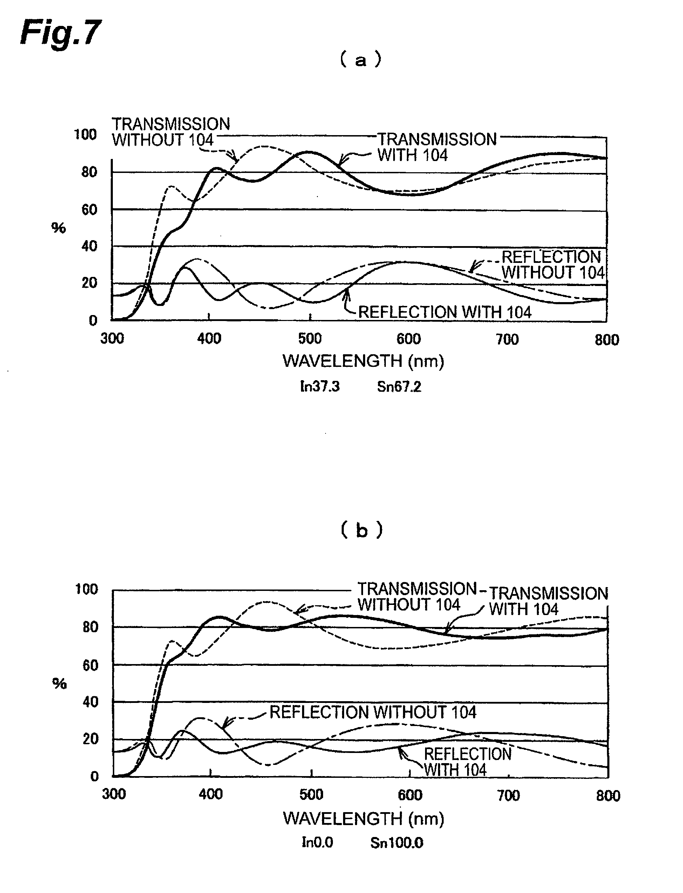

The reflectance reducing effect due to the transparent layer 104 present in the antifogging element 10 shown in Figure 1 in relation to the first embodiment of the present invention is shown in Figures 5, 6, and 7. The transmittance and reflectance are shown as a function of wavelength in from (a) of Figure 5 to (b) of Figure 7 for antifogging elements 10 containing the transparent layers 104 with the individual compositions shown in Table 1.

"Transmission with 104" and "reflection with 104" in the figures refer to the transmittance and reflectance, respectively, of an antifogging element 10 provided with a transparent layer 104 of ITO with the specified composition. This antifogging element 10 has a transparent layer 104 comprising a 70 nm ITO film on a transparent substrate 102 (glass substrate), a photocatalytic substance layer 106 comprising a 200 nm film of TiO₂ on the transparent layer 104, and a hydrophilic layer 108 comprising a 20 nm film of SiO₂ on the photocatalytic substance layer 106.

"Transmission without 104" and "reflection without 104" refer to the transmittance and reflectance, respectively, for the formation on a transparent substrate (glass substrate) of only a 200 nm film of TiO₂ and a 20 nm film of SiO₂ in the sequence given, i.e., a transparent layer 104 is not present. It can be confirmed that in the absence of the transparent layer 104 there is a large variation in the reflectance as a function of wavelength and a yellow-tinted color tone is produced.

In the antifogging element 10, on the other hand, the transparent layer 104 is provided between the photocatalytic substance layer 106 and the transparent substrate 102. The transparent layer 104 is an oxide film that has a refractive index value intermediate between the refractive index of the photocatalytic substance layer 106 and the refractive index of the transparent substrate 102. This results in a good suppression of the reflectance in the antifogging element 10 and a lessening of the difference between the peaks and valleys in the spectral reflection. This, in turn, inhibits reflective color. It can be confirmed that the reflectance is satisfactorily suppressed and a yellow-tinted color tone is suppressed by the disposition of the ITO-based transparent layer 104 as an intermediate layer in such an antifogging element 10.

The refractive index of the glass used for the transparent substrate 102 in this case is about 1.52, while the refractive index of the TiO₂ used for the photocatalytic substance layer 106 is about 2.35. In addition, the refractive index of the ITO used for the transparent layer 104 and the refractive index of the SnO₂ present in the transparent layer 104 are both about 2, which is a refractive index value intermediate between the refractive index of the transparent substrate 102 and the refractive index of the photocatalytic substance layer 106. Due to this the antifogging element 10 of this example is able to properly inhibit reflective color.

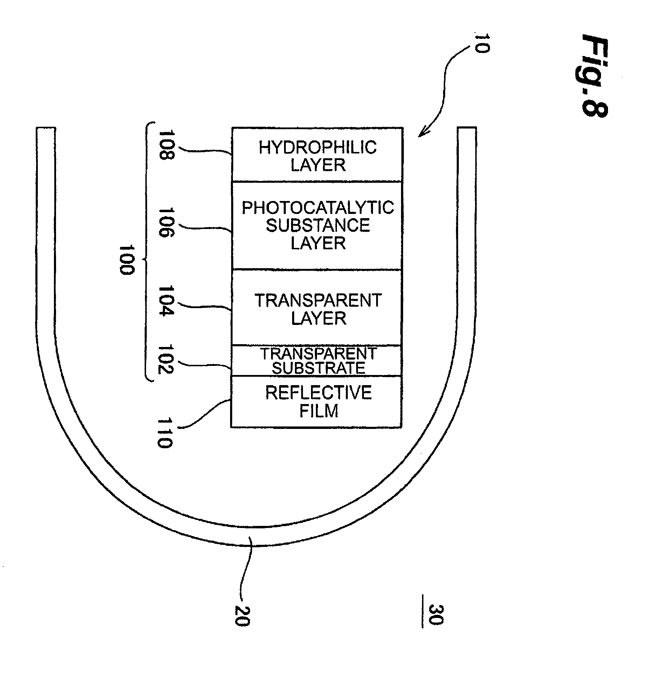

An example of the structure of an automotive outer mirror 30 comprising a second embodiment of the present invention is shown in Figure 8. Except as described in the following, a structure in Figure 8 that has the same reference symbol as in Figure 1 has the same or a similar function as the structure in Figure 1 and will therefore not be described in detail again.

In this example, an automotive outer mirror 30 is provided with a mirror body 20 and an antifogging element 10. The mirror body 20 houses the antifogging element 10 by encasing the antifogging element 10 from the back side. The antifogging element 10 has a light transmissive member 100 and a reflective film 110. The light transmissive member 100 has the same function or a similar function and the same structure or a similar structure as the light transmissive member 100 described using Figure 1 to Figure 7 and contains a transparent substrate 102, transparent layer 104, photocatalytic substance layer 106, and hydrophilic layer 108.

The reflective film 110 is, for example, a single reflective film, stacked film, or a mixed film of, for example, Al, Cr, Rh, or Ag, and is formed on the reverse surface of the transparent substrate 102 from the surface on which the transparent layer 104 is formed. As a result, the reflective film 110 reflects the light incident from the outside of the automotive outer mirror 30 and traversing the hydrophilic layer 108, photocatalytic substance layer 106, transparent layer 104, and transparent substrate 102, to the outside of the automotive outer mirror 30. The antifogging element 10 of this example is thus structured as an antifogging mirror. The reflective film 110 may be formed on the back side of the transparent substrate 102, for example, with another layer sandwiched therebetween.

Safety considerations require that the components used in vehicles exhibit a high durability, and, for example, an automotive outer mirror 30, which is attached on the vehicle exterior, must have a high acid resistance in anticipation of the effects of acid rain. Safety considerations also require that an automotive outer mirror 30 have an antifogging element 10 that does not generate, inter alia, interference-induced reflective color.

In response to the preceding, the reflective color in the antifogging element 10 of this example is reduced by the transparent layer 104. In addition, this transparent layer 104, by virtue of having a composition that is the same as or similar to that of the transparent layer 104 described with reference to Figure 1, has a high acid resistance. As a consequence, this example can provide a very safe, highly acid-resistant automotive outer mirror 30.

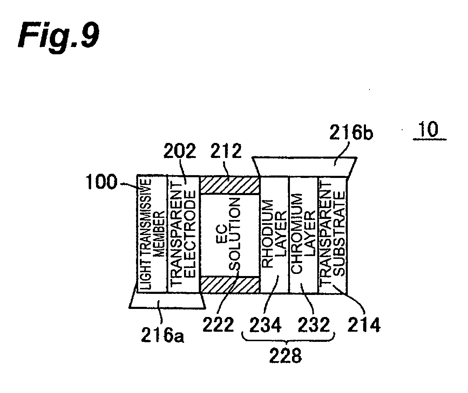

An example of an antifogging element 10 comprising a third embodiment of the present invention is shown in Figure 9. In this embodiment, the antifogging element 10 is a reflective antifogging and antiglare element (antifogging and antiglare mirror). Except as described in the following, a structure in Figure 9 that has the same reference symbol as in Figure 1 has the same or a similar function as the structure in Figure 1 and will therefore not be described in detail again. The antifogging element 10 of this example may be used for an automotive outer mirror 30 (refer to Figure 8).

The antifogging element 10 in this example comprises the combination of a light transmissive member 100 and an electrochromic (EC) element (the electrochromic layer 222) and contains a light transmissive member 100, a transparent electrode 202, an electrochromic layer 222, a seal 212, an electrode/reflective film 228, a transparent substrate 214, and a plurality of clip electrodes 216a, 216b. The transparent electrode 202, electrochromic layer 222, electrode/reflective film 228, and transparent substrate 214 are provided in the sequence given from the side adjacent to the light transmissive member 100 and are disposed in this order on the back surface of the light transmissive member 100. The back surface of the light transmissive member 100 denotes the surface at which the transparent substrate 102 (refer to Figure 1) of the light transmissive member 100 resides. As a consequence, the electrochromic layer 222 is disposed on the back side of the light transmissive member 100 facing the transparent layer 104 (refer to Figure 1) with the transparent electrode 202 and the transparent substrate 102 (refer to Figure 1) interposed therebetween.

The electrochromic layer 222 is a layer that contains a substance that exhibits electrochromic behavior. In this example, the electrochromic layer 222 is a layer of an electrochromic solution (EC solution) that contains an electrochromic substance such as viologen, a solvent such as γ-butyrolactone or propylene carbonate, and an ultraviolet absorber such as benzophenone or cyanoacrylate, and is sealed by a seal 212.

As a consequence, the electrochromic layer 222, in response to the application of a prescribed voltage, changes the color tone of the light incident through the light transmissive member 100 to a color tone with a glare-reducing character. In addition, the light converted to a color tone with a glare-reducing character is reflected by the electrode/reflective film 228 to the outside of the antifogging element 10 and is thereby retransmitted through the electrochromic layer 222, the transparent electrode 202, and the light transmissive member 100.

The transparent electrode 202, the electrochromic layer 222, the seal 212, the electrode/reflective film 228, the transparent substrate 214, and the clip electrodes 216a, 216b may be, for example, a transparent electrode, electrochromic layer, seal, electrode/reflective film, transparent substrate, and clip electrode as commonly known for use in electrochromic elements. The transparent electrode 202 and the electrode/reflective film 228 are electrodes that feed power to the electrochromic layer 222. The transparent electrode 202 and the electrode/reflective film 228 receive power from the outside via the clip electrodes 216a, 216b. In the example under consideration, the transparent electrode 202 is formed, for example, by a transparent electrode film of ITO, SnO₂ and so forth. In addition, the electrode/reflective film 228 comprises a rhodium layer 234 and a chromium layer 232. The transparent substrate 214 is a substrate for the lamination thereon of the electrode/reflective film 228, electrochromic layer 222, and transparent electrode 202.

With regard to this EC element-equipped antifogging and antiglare element, the EC element therein, in response to the supply of power, converts to the glare-reducing state of a prescribed color tone, for example, a darkened color tone. As a consequence, if reflective color were to be produced in the light transmissive member 100, the risk would arise that the amount of light traversing both the EC element and the light transmissive member 100 would undergo a substantial decline. However, due to the reduction in the reflective color of the light transmissive member 100 in the example under consideration, the color tone of the antifogging element 10 can be brought to the glare-reducing color tone of the electrochromic layer 222.

In the example under consideration, the composition of the transparent layer 104 is a composition for which a satisfactory acid resistance has been determined, as described with reference to Table 1. As a consequence, this example can provide an antifogging and antiglare element that is highly resistant to the environment and that does not impair the native color tone of the EC element.

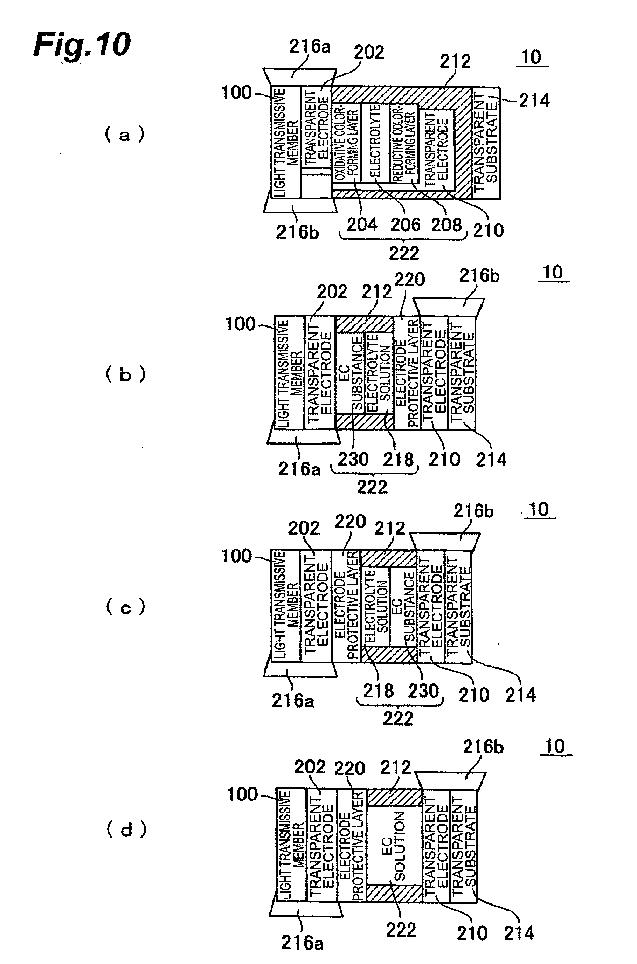

An example of an antifogging element 10 comprising a fourth embodiment of the present invention is shown in Figure 10. In this embodiment, the antifogging element 10 is a transmissive antifogging and antiglare element. Except as described in the following, a structure in Figure 10 that has the same reference symbol as in Figure 9 has the same or a similar function as the structure in Figure 9 and will therefore not be described in detail again.

An example of the structure of the antifogging element 10 according to this embodiment is shown in (a) of Figure 10. The antifogging element 10 in this example has a light transmissive member 100, transparent electrode 202, electrochromic layer 222, transparent electrode 210, seal 212, transparent substrate 214, and a plurality of clip electrodes 216a, 216b. The transparent electrode 202, electrochromic layer 222, transparent electrode 210, and transparent substrate 214 are provided in the sequence given from the side adjacent to the light transmissive member 100 and are disposed in this order on the back surface of the light transmissive member 100. The transparent electrode 210 may be a transparent electrode as commonly known for use in electrochromic elements.

In addition, the electrochromic layer 222 in this example has an oxidative color-forming layer 204, an electrolyte 206, and a reductive color-forming layer 208 in the sequence given from the side adjacent to the light transmissive member 100. The oxidative color-forming layer 204 is, for example, an oxidative color-forming film that contains IrOₓ, NiOₓ, or the like. The electrolyte 206 is, for example, a solid electrolyte such as Ta₂O₅ or the like. The reductive color-forming layer 208 is, for example, a reductive color-forming film of WO₃, MoO₃, or the like. This case can again provide an antifogging and antiglare element that is highly resistant to the environment and that does not impair the native color tone of the EC element.

Another example of the structure of the antifogging element 10 is shown in (b) of Figure 10. In this example, the electrochromic layer 222 has an EC substance 230 and an electrolyte solution 218 in the sequence given from the side adjacent to the light transmissive member 100. This EC substance 230 is, for example, an electrochromic substance such as WO₃, MoO₃, IrOₓ, NiOₓ, or the like. The electrolyte solution 218 is a solution that contains an electrolyte such as LiI or LiClO₄, a solvent such as γ-butyrolactone or propylene carbonate, and an ultraviolet absorber such as benzophenone or cyanoacrylate.

In the example under consideration, the antifogging element 10 is additionally provided with an electrode protective layer 220 between the electrochromic layer 222 and the transparent electrode 210. This electrode protective layer 220 is, for example, a silicon oxide (SiO₂) film or the like, and functions to protect the transparent electrode 210 from the electrolyte solution 218 in the electrochromic layer 222. This case can again provide an antifogging and antiglare element that is highly resistant to the environment and that does not impair the native color tone of the EC element.

Yet another example of the structure of the antifogging element 10 is shown in (c) of Figure 10. In this example, the electrochromic layer 222 has an electrolyte solution 218 and an EC substance 230 in the sequence given from the side adjacent to the light transmissive member 100. The antifogging element 10 is therefore provided with an electrode protective layer 220 between the transparent electrode 202 and the electrochromic layer 222 in order to protect the transparent electrode 202. This case can again provide an antifogging antiglare element that is highly resistant to the environment and that does not impair the native color tone of the EC element.

An additional example of the structure of the antifogging element 10 is shown in (d) of Figure 10. In this example, the electrochromic layer 222 is a layer of an electrochromic solution (EC solution) that contains an electrochromic substance such as viologen, a solvent such as γ-butyrolactone or propylene carbonate, and an ultraviolet absorber such as benzophenone or cyanoacrylate. This case can again provide an antifogging and antiglare element that is highly resistant to the environment and that does not impair the native color tone of the EC element.

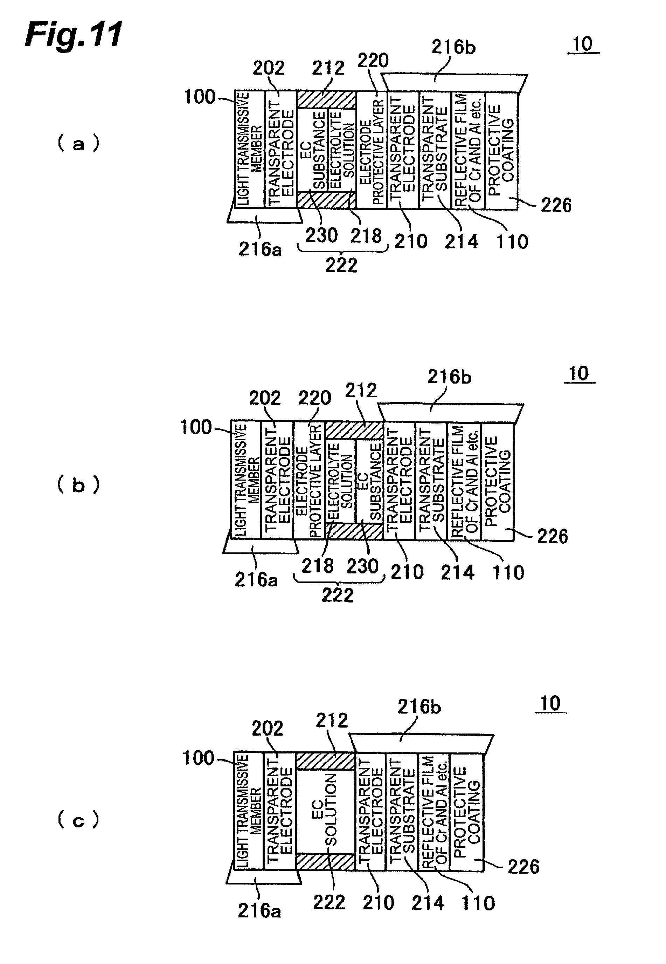

An example of an antifogging element 10 comprising a fifth embodiment of the present invention is shown in Figure 11. The antifogging element 10 in this embodiment is a reflective antifogging and antiglare element (antifogging and antiglare mirror). Except as described in the following, a structure in Figure 11 that has the same reference symbol as in Figure 9 or Figure 10 has the same or a similar function as the structure in Figure 9 and Figure 10 and will therefore not be described in detail again.

An example of the structure of the antifogging element 10 according to this embodiment is shown in (a) of Figure 11. In this example, the antifogging element 10 has a light transmissive member 100, transparent electrode 202, electrochromic layer 222, seal 212, electrode protective layer 220, transparent electrode 210, transparent substrate 214, reflective film 110, protective coating 226, and a plurality of clip electrodes 216a, 216b. The transparent electrode 202, electrochromic layer 222, electrode protective layer 220, transparent electrode 210, transparent substrate 214, reflective film 110, and protective coating 226 are provided in the sequence given from the side adjacent to the light transmissive member 100 and are disposed in this order on the back surface of the light transmissive member 100. In the example under consideration, the electrochromic layer 222 is provided with an EC substance 230 and an electrolyte solution 218 in the sequence given from the side adjacent to the light transmissive member 100.

The antifogging element 10 of this example is executed as an antifogging and antiglare mirror by forming a reflective film 110 on the back of the transparent substrate 214 in an antiglare element made by the interposition of a substance that exhibits electrochromic behavior. This case can also provide an antifogging and antiglare element that exhibits a high resistance to the environment and that does not impair the native color tone of the EC element.

The protective coating 226 is a layer placed in order to stop corrosion of the reflective film 110. When the reflective film 110 itself is corrosion resistant, the antifogging element 10 may have a structure from which the protective coating 226 has been eliminated.

Another example of the structure of the antifogging element 10 is shown in (b) of Figure 11. In this example, the electrochromic layer 222 has an electrolyte solution 218 and an EC substance 230 in the sequence given from the side adjacent to the light transmissive member 100. As a consequence, an electrode protective layer 220 is disposed in this example between the transparent electrode 202 and the electrochromic layer 222. This case can also provide an antifogging and antiglare element that exhibits a high resistance to the environment and that does not impair the native color tone of the EC element.

Yet another example of the structure of the antifogging element 10 is shown in (c) in Figure 11. The electrochromic layer 222 in this example has a structure that is the same as or similar to that of the electrochromic layer 222 described with reference to (d) of Figure 10. This case can also provide an antifogging and antiglare element that exhibits a high resistance to the environment and that does not impair the native color tone of the EC element.

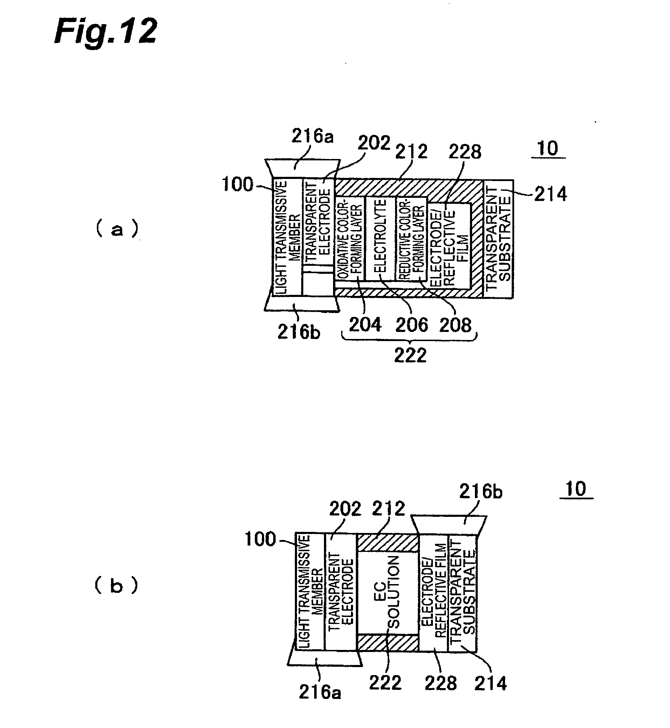

An example of an antifogging element 10 comprising a sixth embodiment of the present invention is shown in Figure 12. The antifogging element 10 in this embodiment is a reflective antifogging and antiglare element (antifogging and antiglare mirror). Except as described in the following, a structure in Figure 12 that has the same reference symbol as in Figure 9 or Figure 10 has the same or a similar function as the structure in Figure 9 and Figure 10 and will therefore not be described in detail again.

An example of the structure of the antifogging element 10 according to this embodiment is shown in (a) of Figure 12. In this example, the antifogging element 10 has a light transmissive member 100, transparent electrode 202, electrochromic layer 222, electrode/reflective film 228, seal 212, transparent substrate 214, and a plurality of clip electrodes 216a, 216b. The transparent electrode 202, electrochromic layer 222, electrode/reflective film 228, and transparent substrate 214 are provided in the sequence given from the side adjacent to the light transmissive member 100 and are disposed in this order on the back surface of the light transmissive member 100. In the example under consideration, the electrochromic layer 222 has an oxidative color-forming layer 204, electrolyte 206, and reductive color-forming layer 208 in the sequence given from the side adjacent to the light transmissive member 100. This case can also provide an antifogging and antiglare element that exhibits a high resistance to the environment and that does not impair the native color tone of the EC element. The electrode/reflective film 228 is formed, for example, of Cr and/or Al.

Another example of the structure of the antifogging element 10 is shown in (b) of Figure 12. In this example, the electrochromic layer 222 has a structure that is the same as or similar to that of the electrochromic layer 222 described with reference to (d) of Figure 10. This case can also provide an antifogging and antiglare element that exhibits a high resistance to the environment and that does not impair the native color tone of the EC element.

The present invention is described in the preceding using embodiments thereof, but the technical scope of the present invention is not limited to the scope described in these embodiments. It will be clear to the individual skilled in the art that various modifications or improvements can be added to these embodiments. It is clear from the claims that modes that incorporate such modifications and improvements can also be encompassed by the technical scope of the present invention.

### INDUSTRIAL APPLICABILITY

The antifogging element of this invention is well adapted for use, for example, in automotive outer mirrors and particularly in automotive outer mirrors that have an antifogging antiglare capacity.

### BRIEF DESCRIPTION OF THE DRAWINGS

Figure 1 shows an example of the structure of an antifogging element 10 according to a first embodiment of the present invention.

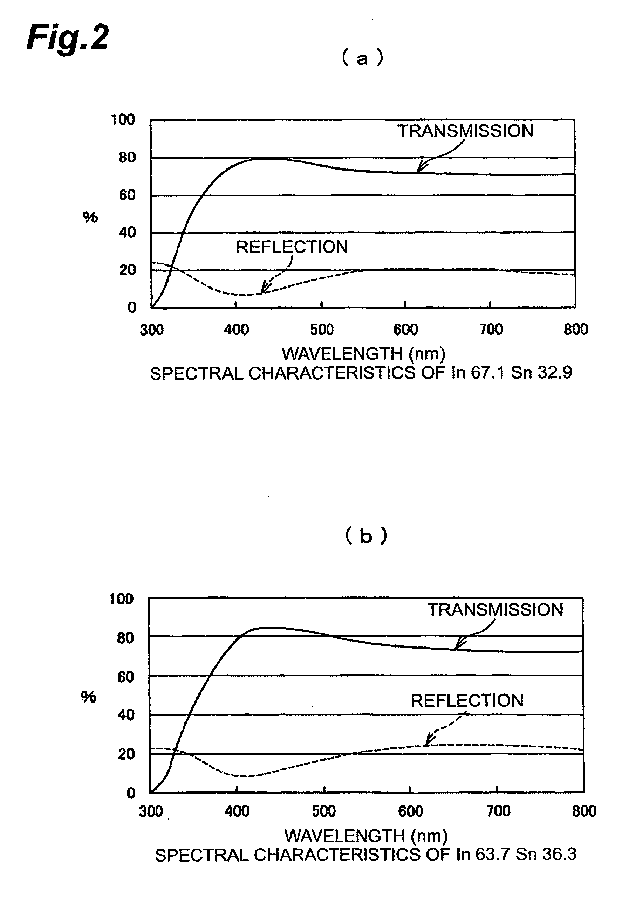

Figure 2 shows the spectral characteristics of a transparent layer 104.

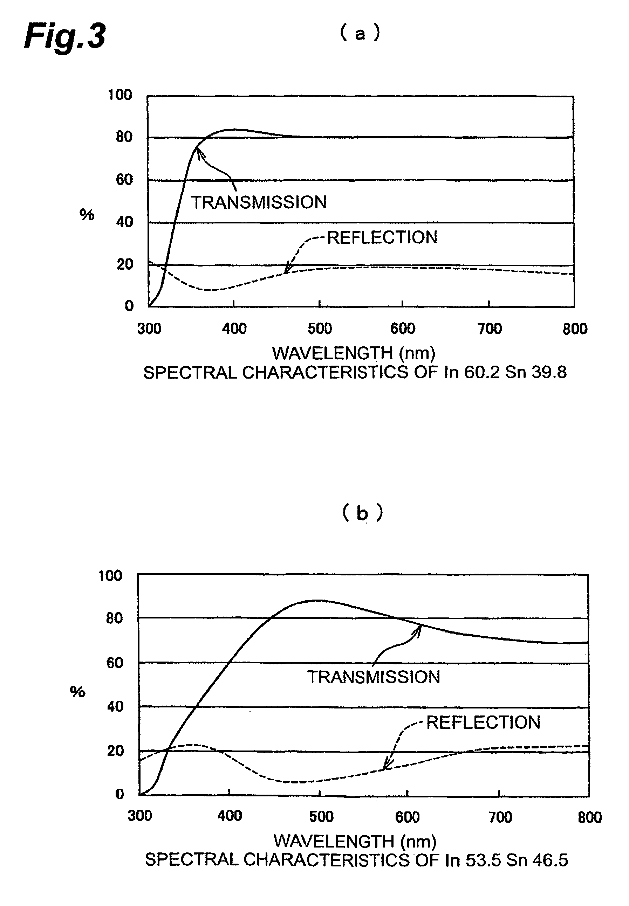

Figure 3 shows the spectral characteristics of a transparent layer 104.

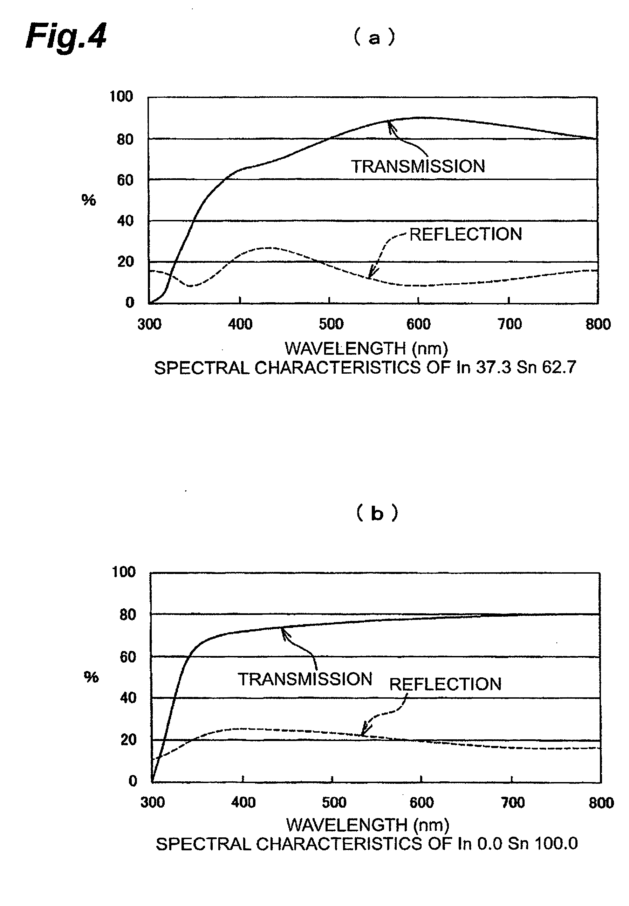

Figure 4 shows the spectral characteristics of a transparent layer 104.
Figure 5 shows the reflectance lowering effect due to the transparent layer 104.

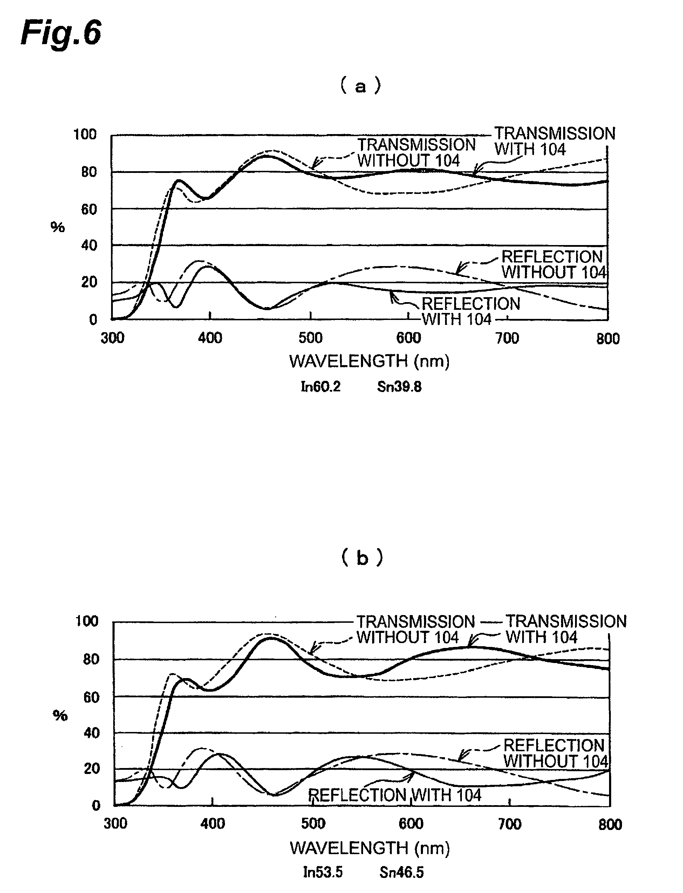

Figure 6 shows the reflectance lowering effect due to the transparent layer 104.
Figure 7 shows the reflectance lowering effect due to the transparent layer 104.
Figure 8 shows an example of the structure of an automotive outer mirror 30 according to a second embodiment of the present invention.
Figure 9 shows an example of an antifogging element 10 according to a third embodiment of the present invention.
Figure 10 shows an example of an antifogging element 10 according to a fourth embodiment of the present invention.
Figure 11 shows an example of an antifogging element 10 according to a fifth embodiment of the present invention.
Figure 12 shows an example of an antifogging element 10 according to a sixth embodiment of the present invention.
Figure 13 shows an element 40 that is a comparative example with respect to the antifogging element 10.
Figure 14 shows the spectral characteristics of the element 40.

### EXPLANATION OF REFERENCE NUMERALS

10 ... antifogging element, 20 ... mirror body, 30 ... automotive outer mirror, 40 ... element, 100 ... light transmissive member, 102 ... transparent substrate, 104 ... transparent layer, 106 ... photocatalytic substance layer, 108 ... hydrophilic layer, 110 ... reflective film, 202 .. - transparent electrode, 204 ... oxidative color-forming layer, 206 ... electrolyte, 208 ... reductive color-forming layer, 210 ... transparent electrode, 212 ... seal, 214 ... transparent substrate, 216 ... clip electrode, 218... electrolyte solution, 220 ... electrode protective layer, 222 ... electrochromic layer, 226 ... protective coating, 228 ... electrode/reflective film, 230... EC substance, 232 ... chromium layer, 234 ... rhodium layer, 402 ... transparent substrate, 406 ... photocatalytic substance layer

## Claims

1. An antifogging element that utilizes a photocatalytic reaction, comprising:
a transparent substrate;
a transparent layer that is formed as a film on the transparent substrate and that has a refractive index larger than that of the transparent substrate;
a photocatalytic substance layer that is formed as a film on the transparent layer by stacking TiO₂ thereon and that has a refractive index larger than that of the transparent layer; and
a hydrophilic layer that is formed of a hydrophilic material, on the photocatalytic substance layer, **characterized in that**
the transparent layer has indium oxide as the main component and contains at least 40% tin oxide in the atomic composition ratio.

2. The antifogging element according to claim 1, further comprising a reflective film that is formed on the reverse surface of the transparent substrate from the surface on which the transparent layer is formed and that reflects incident light that has traversed the hydrophilic layer, photocatalytic substance layer, transparent layer, and transparent substrate.

3. The antifogging element according to claim 1 or 2, further comprising an electrochromic layer that faces the transparent layer with the transparent substrate interposed therebetween.

4. An automotive outer mirror, comprising the antifogging element according to any of claims 1 to 3.

## Patentansprüche

1. Antibeschlagelement, das eine photokatalytische Reaktion verwendet, mit:
einem transparenten Substrat;
einer transparenten Schicht, die als Film auf dem transparenten Substrat ausgebildet ist, und die einen größeren Brechungsindex als das transparente Substrat aufweist;
einer Schicht einer photokatalytischen Substanz, welche durch Ablagern von TiO₂ als Film auf der transparenten Schicht ausgebildet ist, und welche einen größeren Brechungsindex als die transparente Schicht aufweist; und
einer aus einem hydrophilen Material auf der photokatalytischen Substanz-Schicht ausgebildeten hydrophilen Schicht,
**dadurch gekennzeichnet, dass**
die transparente Schicht Indiumoxid als Hauptbestandteil aufweist und im Atomzusammensetzungsverhältnis mindestens 40% Zinnoxid enthält.

2. Antibeschlagelement nach Anspruch 1, ferner mit einem reflektierenden Film, der auf der Seite des transparenten Substrats ausgebildet ist, welche der Seite abgewandt ist, auf welcher die transparente Schicht ausgebildet ist, und der einfallendes Licht reflektiert, das die hydrophile Schicht, die photokatalytische Substanz-Schicht, die transparente Schicht und das transparente Substrat durchquert hat.

3. Antibeschlagelement nach Anspruch 1 oder 2, ferner mit einer elektrochromen Schicht, welche der transparenten Schicht unter Zwischenfügung des transparenten Substrats zugewandt ist.

4. Fahrzeugaußenspiegel mit dem Antibeschlagelement nach einem der Ansprüche 1 bis 3.

## Revendications

1. Dispositif antibuée utilisant une réaction photocatalytique, comprenant:
un substrat transparent;
une couche transparente formée sous forme d'un film sur le substrat transparent et ayant un indice de réfraction supérieur à celui du substrat transparent;
une couche d'une substance photocatalytique formée sous forme d'un film sur ladite couche transparente par déposition de TiO₂ sur la même et ayant un indice de réfraction supérieur à celui de ladite couche transparente; et
une couche hydrophile formée d'un matériau hydrophile sur la couche de substance photocatalytique,
**caractérisé en ce que**
ladite couche transparente comprend de l'oxyde d'indium comme composant principal et contient au moins 40% de l'oxyde d'étain dans le rapport de la composition atomique.

2. Dispositif antibuée selon la revendication 1, comprenant en outre un film réflecteur formé sur la face arrière du substrat transparent, opposée à la face sur laquelle la couche transparente est formée, et reflétant la lumière incidente qui a traversé la couche hydrophile, la couche de substance photocatalytique, la couche transparente, et le substrat transparent.

3. Dispositif antibuée selon la revendication 1 ou 2, comprenant en outre une couche électrochrome tournée vers la couche transparente avec ledit substrat transparent interposé entre les deux.

4. Miroir externe d'un véhicule comprenant le dispositif antibuée selon l'une quelconque des revendications 1 à 3.
